(19) Europäisches Patentamt European Patent Office Office européen des brevets

(11) **EP 4 442 717 A1**

(12) **EUROPEAN PATENT APPLICATION**
published in accordance with Art. 153(4) EPC

(43) Date of publication:
**09.10.2024 Bulletin 2024/41**

(21) Application number: **22901445.1**

(22) Date of filing: **02.12.2022**

(51) International Patent Classification (IPC):
**C08F 220/00** (2006.01)   **C08F 220/12** (2006.01)
**C08F 220/54** (2006.01)   **C08F 220/56** (2006.01)
**C08F 230/02** (2006.01)   **C08F 236/20** (2006.01)

(52) Cooperative Patent Classification (CPC):
**C08F 2/00; C08F 4/04; C08F 220/00; C08F 220/06;
C08F 220/12; C08F 220/20; C08F 220/38;
C08F 220/54; C08F 220/56; C08F 220/58;
C08F 230/02; C08F 236/20**

(86) International application number:
**PCT/JP2022/044594**

(87) International publication number:
**WO 2023/101015 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.12.2021   JP 2021196860**
**03.12.2021   JP 2021196875**

(71) Applicants:
• **KIRIN HOLDINGS KABUSHIKI KAISHA**
**Nakano-ku, Tokyo 164-0001 (JP)**
• **The University of Tokyo**
**Bunkyo-ku, Tokyo 113-8654 (JP)**

(72) Inventors:
• **TAKAI Madoka**
**Tokyo 113-8654 (JP)**
• **MASUDA Tsukuru**
**Tokyo 113-8654 (JP)**
• **SAEGUSA Yui**
**Tokyo 113-8654 (JP)**
• **TSUJI Toshikazu**
**Tokyo 164-0001 (JP)**

(74) Representative: **ABG Intellectual Property Law,
S.L.**
**Avenida de Burgos, 16D**
**Edificio Euromor**
**28036 Madrid (ES)**

(54) **HIGH-STRENGTH HIGH-VISCOSITY POLYMER GEL**

(57)    There is disclosed a polymer gel including a structure derived from a main monomer M1, a crosslinking agent monomer M2, and a radical polymerization initiator I as a constituent element. In this polymer gel, a monomer reactivity ratio $r_1$ of the main monomer M1 and a monomer reactivity ratio $r_2$ of the crosslinking agent monomer M2 satisfy a condition of $r_1 > r_2$, a molar ratio of an addition amount of the crosslinking agent monomer to an addition amount of the main monomer M1 is 1% or less, and a decomposition rate ($10^{-7}$/s) of the radical polymerization initiator I at 25°C is 25 or more. This polymer gel has properties of high strength and high viscosity.

**Description**

[Reference to Related Applications]

The present patent application involves a claim of priority based on Japanese Patent Application No. 2021-196860 (filing date: December 3, 2021) or Japanese Patent Application No. 2021-196875 (filing date: December 3, 2021), which is a patent application filed earlier in Japan. The entire disclosure in this earlier patent application is incorporated herein by reference.

[Background of Invention]

Technical Field

The present invention relates to a polymer gel with high strength and high viscosity.

Background Art

Radical copolymerization of vinyl monomers and chemical crosslinking agents is commonly used as a method for obtaining polymer hydrogels. Among polymer hydrogels, those with high strength can be obtained by, for example, specific chemical species or specific production methods in some cases (Patent Literature 1). However, in general, polymer hydrogels (particularly, chemically crosslinked polymer hydrogels) have a characteristic of often having low viscosity despite having high strength. Low viscosity of polymer hydrogels may cause problems such as being brittle, lacking in flexibility, or having poor impact and vibration absorption properties depending on usage scenes.

Many studies have been performed on high-strength polymer gels. For example, it has been reported that a high-strength hydrogel containing anion-modified cellulose nanofibers and a method for producing the same are provided (Patent Literature 1). However, the prior art according to Patent Literature 1 is limited to a specific chemical species of anion-modified cellulose nanofibers, the production thereof requires high-temperature and high-pressure treatment, the viscosity thereof is low, and the breaking strength of the hydrogel remains at 2.0 to 8.0 kPa.

There has also been reported a hydrogel composed of a polymer matrix and the like containing a multivalent ion-containing compound and a copolymer of a monofunctional monomer having one ethylenically unsaturated group and a polyfunctional monomer having two to six ethylenically unsaturated groups, the hydrogel having a tensile breaking strength of 30 kPa or more and a tensile breaking elongation of 200% or more (Patent Literature 2). However, in the prior art according to Patent Literature 2, the polymer matrix is limited to a specific material, the viscosity thereof is low, a multivalent ion-containing compound is necessary for the gel composition, and the application of the hydrogel may be limited.

[Citation List]

[Patent Literature]

[Patent Literature 1] Japanese Unexamined Patent Application Publication No. 2018-199753
[Patent Literature 2] Japanese Unexamined Patent Application Publication No. 2017-171825

[Summary of Invention]

The present inventors have performed intensive studies to provide a polymer gel with high strength and high viscosity and as a result found that the use of a combination of a main monomer and a crosslinking agent monomer with predetermined properties, the adjustment of the usage ratio of the crosslinking agent monomer to the main monomer, and the use of a polymerization initiator with predetermined properties can provide a polymer gel with high strength and high viscosity.

Thus, the present invention provides a novel polymer gel with high strength and high viscosity.

The present invention includes the following inventions.

(1) A polymer gel including

a structure derived from a main monomer M1, a crosslinking agent monomer M2, and a radical polymerization initiator I as a constituent element, wherein
a monomer reactivity ratio $r_1$ of the main monomer M1 and a monomer reactivity ratio $r_2$ of the crosslinking agent monomer M2 satisfy a condition of $r_1 > r_2$,
a molar ratio of an addition amount of the crosslinking agent monomer M2 to an addition amount of the main monomer M1 is 1% or less, and
a decomposition rate ($10^{-7}$/s) of the radical polymerization initiator I at 25°C is 25 or more.

(2) The polymer gel according to (1), wherein the monomer reactivity ratio $r_1$ of the main monomer M1 and the monomer reactivity ratio $r_2$ of the crosslinking agent monomer M2 further satisfy conditions of $r_1 > 1$ and $r_2 < 1$.

(3) The polymer gel according to (1) or (2), wherein at 25°C, a maximum value of tan $\delta$ at an angular frequency $\omega$ (rad·s$^{-1}$) of 0.1 to 10 is 0.1 or more, and a maximum value of a storage modulus G' when the angular frequency $\omega$ (rad·s$^{-1}$) is changed from 0.1 to 10 is more than or equal to twice a minimum value.

(4) The polymer gel according to any one of (1) to (3), wherein a strain ($\varepsilon$) at a breaking point in a compression test is 0.8 or more at 25°C.

(5) The polymer gel according to any one of (1) to (4), wherein a strain ($\varepsilon$) at a breaking point in a tensile test is 2 or more at 25°C.

(6) The polymer gel according to any one of (1) to (5), wherein at 25°C, an elastic modulus (G) is 2300 Pa or less, and a strain ($\varepsilon$) at a breaking point is 1 or more in a tensile test.

(7) The polymer gel according to any one of (1) to (6), wherein a water content is 4 to 97% at 25°C.

(8) The polymer gel according to any one of (1) to (7), wherein $r_1 > 3$ and $r_2 < 0.7$.

(9) The polymer gel according to any one of (1) to (8), wherein a product of $r_1$ and $r_2$, $r_1 \cdot r_2$, is 2 or more.

(10) The polymer gel according to any one of (1) to (9), wherein a combination of the main monomer M1 and the crosslinking agent monomer M2 is a combination of methacrylamide and acrylamide, or a combination of methacrylate and acrylamide.

(11) The polymer gel according to any one of (1) to (10), wherein

the main monomer M1 is a monomer selected from the group consisting of MPC (2-methacryloyloxyethyl phosphorylcholine), mOEGMA (oligoethylene glycol methacrylate), MTAC (methacrylatoethyl trimethyl ammonium chloride), SPM (potassium 3-(methacryloyloxy)propanesulfonate), and MDBS (4-[(3-methacrylamidopropyl)dimethylammonio]butane-1-sulfonate), and
the crosslinking agent monomer M2 is a monomer selected from the group consisting of MBAAm (N,N'-methylenebisacrylamide), OBAAm (N,N'-[oxybis(2,1-ethanediyloxy-3,1-propanediyl)]bisacrylamide), and PEGDM (polyethylene glycol dimethacrylate).

(12) The polymer gel according to any one of (1) to (11), wherein the radical polymerization initiator I is ADIP (2,2'-azobis-(2-(1,3-dimethyl-4,5-dihydro-1H-imidazol-3-ium-2-yl))propane triflate) or APS/TEMED (ammonium persulfate/N,N,N',N'-tetramethylethylenediamine).

(13) The polymer gel according to any one of (1) to (12), which has an adhesion property.

(14) The polymer gel according to any one of (1) to (13), wherein the main monomer M1 is methacrylate.

(15) A method for producing the polymer gel according to any one of (1) to (14), the method including

a step of performing a polymerization reaction with the main monomer M1, the crosslinking agent monomer M2, and the radical polymerization initiator I, wherein
a molar ratio of an addition amount of the crosslinking agent monomer M2 to an addition amount of the main monomer M1 is 1% or less.

(16) The method according to (15), wherein the polymerization reaction is performed at a temperature of 35°C or less.

(17) A polymer gel including

a structure derived from a main monomer M1, a crosslinking agent monomer M2, and a radical polymerization initiator I as a constituent element, wherein
a monomer reactivity ratio $r_1$ of the main monomer M1 and a monomer reactivity ratio $r_2$ of the crosslinking agent monomer M2 satisfy a condition of $r_1 > r_2$,
a molar ratio of a content of the crosslinking agent monomer M2 to a content of the main monomer M1 is 1% or less, and
a decomposition rate ($10^{-7}$/s) of the radical polymerization initiator I at 25°C is 25 or more.

The present invention provides a polymer gel with high strength and high viscosity. Further, within the scope of the present invention, it is possible to obtain a high-toughness polymer gel with high strength and high viscosity, and a polymer gel having adhesion properties with high strength and high viscosity.

[Brief Description of Drawings]

[Fig. 1] Fig. 1 is graphs showing the results of the dynamic viscoelasticity of a polymer gel prepared using ADIP as a polymerization initiator.

[Fig. 2-1] Fig. 2-1 is graphs showing the results of the dynamic viscoelasticity of various polymer gels prepared using APS/TEMED as a polymerization initiator.

[Fig. 2-2] Fig. 2-2 is graphs showing the results of the dynamic viscoelasticity of various polymer gels prepared using APS/TEMED as a polymerization initiator.

[Fig. 3] Fig. 3 is a graph showing an Arrhenius plot of the decomposition rate of ADIP in water.

[Fig. 4] Fig. 4 is a graph showing the polymerization behavior of acrylamide/methacrylate when using each polymerization initiator.

[Fig. 5] Fig. 5 is graphs showing the results of evaluating the reactivity of each monomer in copolymerization.

[Fig. 6] Fig. 6 is graphs showing changes in dynamic viscoelasticity depending on the molar ratio of a crosslinking agent MBAAm of a PmOEGMA polymer gel prepared using APS/TEMED as a polymerization initiator.

[Fig. 7] Fig. 7 is graphs showing changes in dynamic viscoelasticity depending on the molar ratio of a crosslinking agent MBAAm of a PMPC polymer gel prepared using APS/TEMED as a polymerization initiator.

[Fig. 8] Fig. 8 is a graph showing the results of a compression test of the PMPC polymer gel prepared using APS/TEMED as a polymerization initiator.

[Fig. 9] Fig. 9 is a graph showing the results of an adhesion test of the PMPC polymer gel prepared using APS/TEMED as a polymerization initiator to glass.

[Fig. 10] Fig. 10 is a graph showing the results of an adhesion test of the PMPC polymer gel prepared using APS/TEMED as a polymerization initiator to chicken skin.

[Fig. 11] Fig. 11 is a graph showing the results of a tensile test of a PMPC polymer gel prepared using OBAAm as a crosslinking agent monomer.

[Fig. 12] Fig. 12 shows the result of $^1$H-NMR measurement of a mixture of MPC and MBAAm before the start of a polymerization reaction.

[Fig. 13] Fig. 13 shows the result of $^1$H-NMR measurement of the mixture of MPC and MBAAm two hours after the start of the polymerization reaction.

[Fig. 14] Fig. 14 is graphs showing the evaluation results of the amount consumed before and after the start of the polymerization reaction for each combination of a main monomer and a crosslinking agent monomer.

[Fig. 15] Fig. 15 is graphs showing the results of a tensile test of polymer gels prepared using each combination of a main monomer, a crosslinking agent monomer, and a polymerization initiator for each of A1 and A2.

[Fig. 16] Fig. 16 is a graph showing the results of plotting the elastic modulus and the breaking strain obtained from Fig. 15 for each gel and evaluating the correlation with synthesis conditions.

[Fig. 17] Fig. 17 is graphs showing the results of superimposing and plotting the elastic moduli and the breaking strains of gels described in known literature on Fig. 16.

[Fig. 18] Fig. 18 is graphs showing the relationship between the water content of a gel and the adhesion force of the gel to glass.

[Fig. 19] Fig. 19 is a graph showing the adhesion property of the gel subjected to condensation after drying to glass.

[Detailed Description of Invention]

In the present invention, monomer reactivity ratios "$r_1$" and "$r_2$" are defined as follows when $M_1$ is a main monomer and $M_2$ is a crosslinking agent monomer: $r_1 = k_{11}/k_{12}$, $r_2 = k_{22}/k_{21}$. Further, the definitions of $k_{11}$, $k_{12}$, $k_{22}$, and $k_{21}$ are as follows. In the growth process of a copolymerization reaction, when a growing species (that is, a monomer at the reactive end of a growing polymer) is $M_1^*$ or $M_2^*$, each growing species can be reacted with $M_1$ or $M_2$. Specifically, the rate constant of the process in which $M_1^*$ reacts with $M_1$ to generate $M_1^*$ is set to $k_{11}$, the rate constant of the process in which $M_1^*$ reacts with $M_2$ to generate $M_2^*$ is set to $k_{12}$, the rate constant of the process in which $M_2^*$ reacts with $M_1$ to generate $M_1^*$ is set to $k_{21}$, and the rate constant of the process in which $M_2^*$ reacts with $M_2$ to generate $M_2^*$ is set to $k_{22}$.

There are various methods for measuring the monomer reactivity ratios $r_1$ and $r_2$ (or $k_{11}$, $k_{12}$, $k_{22}$, and $k_{21}$). Experimentally, several polymerizations are performed with various monomer ratios, and $r_1$ and $r_2$ can be determined by relating the composition of a copolymer generated at the beginning of the polymerization to the charged monomer composition. The composition of the copolymer can be determined by $^1$H-NMR, FT-IR, or the like. When the charged monomer ratio is set to $F = [M_1]/[M_2]$ and the ratio in a polymer is set to $f = d[M_1]/d[M_2]$, the following formula 1 is established by using the monomer reactivity ratio.

[Math. 1]

$$\frac{F}{f}(f - 1) = \frac{F^2}{f}r_1 - r_2 \qquad \text{(Formula 1)}$$

Calculating $F^2/f$ and $(F/f)(f-1)$ and plotting them on rectangular coordinates can provide $r_1$ and $r_2$ from the slope and the intercept (Fineman-Ross method).

Further, to determine the monomer reactivity ratio, it is more desirable to use the Kelen-Tudos method, which is modified as shown in the following formula 2, in order to perform a more reliable analysis.

[Math. 2]

$$\eta = (r_1 + \frac{r_2}{a})\xi - \frac{r_2}{a} \qquad \text{(Formula 2)}$$

wherein *a* is a constant, and a geometric mean between the maximum value and the minimum value of $F^2/f$; in addition,

$$\eta = \frac{F(1 - 1/f)}{a + F^2/f} \text{ , and } \xi = \frac{F^2/f}{a + F^2/f} .$$

Plotting $\xi$ against $\eta$ on rectangular coordinates can provide $r_1$ and $r_2$ from the slope and the intercept.

In the present invention, the "decomposition rate constant" ($10^{-7}$ s$^{-1}$) is defined as the rate of reaction in which a polymerization initiator radical I* is generated from a polymerization initiator I. For example, in a case of an azo-based radical polymerization initiator, the decomposition rate constant is the rate constant in a reaction in which two molecules of the polymerization initiator radical I* are generated from one molecule of the polymerization initiator I, and the same can be considered in a case of persulfate, which is a redox-based polymerization initiator. In addition, it has been shown that two initiator radicals are generated even when persulfate and tetramethylenediamine (TEMED) are used (Feng XD, Guo XQ, Qiu KY., Makromol. Chem. 1988, 189, 77-83).

The decomposition rate is measured by various methods, and for example, can be specifically measured by the following method. In the case of the azo-based radical polymerization initiator, the concentration of the polymerization initiator can be detected by measuring the absorbance derived from an azo group, and thus, the decomposition rate can be determined by determining the rate of change in the polymerization initiator concentration at the reaction temperature. Alternatively, a decomposition rate $k_d$ is represented by the following Arrhenius equation (Formula 3), and thus may be calculated using values reported in literature. In Formula 3, A is a frequency factor, E (kJ·mol$^{-1}$·K$^{-1}$) is activation energy, and R is a gas constant.

[Math. 3]

$$k_d = A \cdot \exp\left(-\frac{E}{RT}\right) \qquad \text{(Formula 3)}$$

In the present invention, a storage modulus "G'" (dynamic storage modulus G') can be measured using, for example, a dynamic viscoelasticity measuring apparatus. For example, G' can be measured by the method described in Examples.

A loss modulus "G''" can be measured using a dynamic viscoelasticity measuring apparatus. For example, G'' can be measured by the method described in Examples.

In the present invention, a loss tangent "tan $\delta$" means loss modulus G''/storage modulus G'.

In the present invention, a "strain ($\varepsilon$)" in a compression test means a strain value determined by the compression test described in Examples.

In the present invention, a "strain ($\varepsilon$)" in a tensile test means a strain value determined by the tensile test described in Examples.

In the present invention, the "adhesion force" means adhesion force (N/m$^2$ = Pa) measured according to the method described in Examples, and when this value is 200 or more, it is determined that the adhesion force is sufficient.

A polymer gel of the present invention is a polymer gel including a structure derived from the main monomer M1, the crosslinking agent monomer M2, and a radical polymerization initiator I as a constituent element. The polymer gel of the present invention can be produced by performing a polymerization reaction using the main monomer M1, the crosslinking agent monomer M2, and the radical polymerization initiator I. In this polymerization reaction, the molar ratio of the addition amount of the crosslinking agent monomer M2 to the addition amount of the main monomer M1 is 1% or less, preferably 0.001 to 1%, and more preferably 0.01 to 1%. According to a preferred embodiment of the present invention, this polymerization reaction is performed at a temperature of 35°C or less (for example, around 25°C).

In the present invention, the main monomer M1 and the crosslinking agent monomer M2 are selected such that the reactivity ratio $r_1$ of the main monomer M1 and the reactivity ratio $r_2$ of the crosslinking agent monomer M2 satisfy the condition of $r_1 > r_2$. According to a preferred embodiment of the present invention, the main monomer M1 and the crosslinking agent monomer M2 are selected such that the reactivity ratio $r_1$ of the main monomer M1 and the reactivity ratio $r_2$ of the crosslinking agent monomer M2 satisfy the conditions of $r_1 > 1$ and $r_2 < 1$. According to another preferred embodiment of the present invention, the main monomer M1 and the crosslinking agent monomer M2 are selected so as to satisfy the conditions of $r_1 > 3$ and $r_2 < 0.7$. According to another preferred embodiment of the present invention, the main monomer M1 and the crosslinking agent monomer M2 are selected such that the product $r_1 \cdot r_2$ of $r_1$ and $r_2$ is 2 or more. The reason for these is considered to be that it is possible to reduce the number of chemical crosslinking points due to a covalent bond, increase the distance between chemical crosslinking points, and increase physical crosslinking points due to a non-covalent bond (the entanglement of polymer chains, the interaction between functional groups (van der Waals forces, a hydrogen bond, an electrostatic interaction, a hydrophobic interaction, and the like), and the like) by setting $r_1$ and $r_2$ within a specific range.

According to a preferred embodiment of the present invention, the combination of the main monomer M1 and the crosslinking agent monomer M2 is a combination of methacrylamide and acrylamide or a combination of methacrylate and acrylamide. According to a further preferred embodiment of the present invention, the main monomer M1 is a monomer selected from the group consisting of MPC (2-methacryloyloxyethyl phosphorylcholine), mOEGMA (oligoethylene glycol methacrylate), MTAC (methacrylatoethyl trimethyl ammonium chloride), SPM (potassium 3-(methacryloyloxy)propanesulfonate), and MDBS (4-[(3-methacrylamidopropyl)dimethylammonio]butane-1-sulfonate), and the crosslinking agent monomer M2 has two or more vinyl groups in a molecule, and is more preferably a monomer selected from the group consisting of MBAAm (N,N'-methylenebisacrylamide), PEGDM (polyethylene glycol dimethacrylate), and OBAAm (N,N'-[oxybis(2,1-ethanediyloxy-3,1-propanediyl)]bisacrylamide). According to another further preferred embodiment of the present invention, the main monomer M1 is methacrylate or methacrylamide.

According to a preferred embodiment of the present invention, for the amount of the main monomer M1 used in the polymerization reaction, for example, the lower limit value can be 0.3 M or more, 0.5 M or more, or 1.5 M or more, and the upper limit value can be 3.0 M or less, 2.5 M or less, or 1.5 M or less. Among them, the amount of the main monomer M1 used in the polymerization reaction is preferably 0.3 to 3.0 M, more preferably 0.5 to 2.5 M, and still more preferably approximately 1.5 M.

In the present invention, the decomposition rate ($10^{-7}$/s) of the radical polymerization initiator I at 25°C is 25 or more. In the present invention, it is preferable to perform the polymerization reaction at a relatively low temperature of 35°C or less (desirably around 25°C), from the viewpoint of reaction operability and the applicability to the in vivo formation of the gel according to the present invention. In this case, suppressing thermal fluctuations between polymer chains is less likely to cause a termination reaction, making it easy for polymer chains to elongate. On the other hand, if the decomposition rate of a polymerization initiator is too slow, there are fewer initiator radicals, making it difficult for an initiation reaction to occur. As a result, the number of polymers decreases, making it difficult to form a gel-like structure in which polymer chains are connected to each other. It is considered that satisfying a certain decomposition rate or more can maintain an initiator radical concentration enough to allow gelation to occur even at relatively low temperatures.

According to a preferred embodiment of the present invention, the radical polymerization initiator I is ADIP (2,2'-azobis-(2-(1,3-dimethyl-4,5-dihydro-1H-imidazol-3-ium-2-yl))propane triflate) or APS/TEMED (ammonium persulfate/N,N,N',N'-tetramethylethylenediamine), and more preferably ADIP.

According to a preferred embodiment of the present invention, for the amount of the radical polymerization initiator I used in the polymerization reaction, for example, the lower limit value can be 0.3% or more, 0.5% or more, or 1.0% or more, and the upper limit value can be 2.0% or less, 1.5% or less, or 1.0% or less, relative to the addition molar amount of the main monomer M1. Among them, the amount of the radical polymerization initiator I used in the polymerization reaction is preferably 0.3 to 2.0%, more preferably 0.5 to 1.5%, and still more preferably approximately 1.0%, relative to the addition molar amount of the main monomer M1.

According to a preferred embodiment of the present invention, for the polymer gel of the present invention, from the viewpoint of high strength, the maximum value of the storage modulus G' when an angular frequency $\omega$ (rad·s$^{-1}$) is changed from 0.1 to 10 at 25°C is preferably twice or more the minimum value, more preferably three times or more, and still more preferably four times or more. In a general polymer gel, it is considered that at 25°C, the maximum value of the storage modulus G' when the angular frequency $\omega$ (rad·s$^{-1}$) is changed from 0.1 to 10 is often less than twice the minimum value.

According to a preferred embodiment of the present invention, for the polymer gel of the present invention, from the viewpoint of high viscosity, the maximum value of tan $\delta$ at an angular frequency $\omega$ (rad·s$^{-1}$) of 0.1 to 10 at 25°C is preferably 0.1 or more, more preferably 0.2 or more, and still more preferably 0.3 or more. The reason for this is that the polymer gel of the present invention is considered to exhibit more highly viscous properties as the maximum value of tan δ is larger. The maximum value of tan δ "0.1" is generally considered to be a large value for polymer gels.

The polymer gel of the present invention preferably has higher strength and/or higher viscosity, from the viewpoint of applicability to a wider range of industrial fields (for example, cosmetic formulations, medical materials, and cell culture substrates).

According to a preferred embodiment of the present invention, for the polymer gel of the present invention, a stress (σ) at a breaking point is preferably 250 kPa or more, more preferably 270 kPa or more, and still more preferably 290 kPa or more, in a compression test at 25°C, from the viewpoint of high toughness. The reason for this is that a higher stress (σ) at the breaking point in the compression test allows the resistance to a higher stress (σ) and provides higher strength. Here, "toughness" in the present invention is an index of the tenacity of a material, and is preferably evaluated based on an area value up to the breaking point under a stress-strain curve, regardless of a compression test or a tensile test. According to a preferred embodiment of the present invention, for the polymer gel of the present invention, the strain (ε) at the breaking point is preferably 0.8 or more, more preferably 0.85 or more, and still more preferably 0.9 or more, in the compression test at 25°C, from the viewpoint of high toughness. The reason for this is that better compressibility (larger deformability) is considered to be exhibited as the strain (ε) at the breaking point in the compression test is larger. Surprisingly, it is considered that more highly viscous gels are likely to cause energy dissipation and/or are less likely to cause crack propagation, which may lead to increased deformability.

According to a preferred embodiment of the present invention, for the polymer gel of the present invention, the stress (σ) at the breaking point is preferably 1 kPa or more, more preferably 100 kPa or more, still more preferably 150 kPa or more, and still more preferably 200 kPa or more, in a tensile test at 25°C, from the viewpoint of high toughness. The reason for this is that a higher stress (σ) at the breaking point in the tensile test allows the resistance to a higher stress (σ) and provides higher strength. According to a preferred embodiment of the present invention, for the polymer gel of the present invention, the strain (ε) at the breaking point is preferably 2 or more, more preferably 3 or more, and still more preferably 4 or more, in a tensile test at 25°C, from the viewpoint of high toughness. The reason for this is that better elongation (larger deformability) is considered to be exhibited as the strain (ε) at the breaking point in the tensile test is larger. Surprisingly, it is considered that more highly viscous gels are likely to cause energy dissipation and/or are less likely to cause crack propagation, which may lead to increased deformability.

In particular, according to a preferred embodiment of the present invention, for the polymer gel of the present invention, from the viewpoint of high toughness, the strain (ε) at the break point obtained by the tensile test at 25°C is preferably 1 or more (more preferably 2 or more), and an elastic modulus (G) obtained from the stress-strain curve of the polymer gel is preferably 2300 Pa or less (more preferably 1200 Pa or less). The polymer gel with a breaking strain of 1 or more and an elastic modulus of 2300 Pa or less is soft and has excellent deformability.

According to a preferred embodiment of the present invention, the polymer gel of the present invention has adhesion properties, and the adhesion force ($N/m^2$ = Pa) is preferably 200 or more, more preferably 300 or more, and still more preferably 400 or more. Further, during a tensile test to measure the adhesion force, the distance when an object separates from (peels off) a gel (hereinafter referred to as a peeling distance) is preferably 0.3 mm or more, and more preferably 0.4 mm or more. Here, for the measurement of the peeling distance, the object for adhesion is preferably one that does not show any deformation during the tensile test to measure the adhesion force, and more preferably one that does not deform, such as a rigid body (this applies to solids such as metal and glass, and excludes solids that deform when performing the tensile test to measure the adhesion force, such as a skin surface). Further, when the polymer gel of the present invention has adhesion properties, the object can also be skin, glass, and the like. The polymer gel of the present invention has high strength and high viscosity (for example, the above parameters such as G', G", and tan δ are satisfied), whereby polymer chains become fluid and enter gaps in an adhesive surface, and then adhere to the adhesive surface due to the entanglement of the polymer chains, the interaction between functional groups, and the like. Further, using a polymerization initiator with a high initiator decomposition rate easily provides dangling chains, which are partial chains with one end that moves freely, causing the polymer chains to become entangled with an adherend. Further, it is considered that the polymer gel becomes more easily deformed, allowing the adhesive state to be easily maintained even when stress is applied. The polymer gel of the present invention preferably has adhesion force in that it can be used as an adhesive (including a binder (a pressure-sensitive adhesive)) and further in that it can be applied to a wider range of industrial fields (for example, cosmetic formulations, medical materials, and cell culture substrates).

According to a preferred embodiment of the present invention, the polymer gel of the present invention exhibits an appropriate water content, and for example, the lower limit value can be 4% or more, 7% or more, and 10% or more, and the upper limit value can be 97% or less, 95% or less, and 80% or less. Among them, the water content of the polymer gel of the present invention is preferably 4 to 97% (4% or more and 97% or less), more preferably 7 to 95%, and still more preferably 10 to 80%.

In the present invention, the water content refers to the percentage of water contained in the gel on a weight basis. Specifically, the water content can be determined by calculating the total weight ($W_{all}$) of the gel and the weight

($W_d$) of the gel that contains almost no water after being sufficiently dried. That is, the water content is determined by the following formula 4, and the number obtained by subtracting $W_d$ from $W_{all}$ means the amount of water contained in the gel.

[Math. 4]

$$\text{Water content (\%)} = (W_{all} - W_d)/W_{all} \times 100 \qquad \text{(Formula 4)}$$

In addition, for the polymer gel of the present invention, a washing step can be added depending on the use thereof. The polymerized gel is immersed in a desired solvent (water, physiological saline, and the like) for a certain period of time, and the solvent is replaced with a fresh one as appropriate, thereby allowing unnecessary components inside the polymer gel to be washed away.

Further, in the present invention, when the water content is properly controlled, the adhesion properties of the polymer gel are observed, and thus, providing a drying step such as air drying in the atmosphere, a desiccator, or an oven allows the washed gel to exhibit sufficient adhesion properties. The polymer gel of the present invention does not lose its function even after being dried to a certain extent, and appropriately adding water or drying can freely control the adhesion force of the polymer gel. In addition, even in a sufficiently dried state (for example, the water content is 3% or less), the polymer gel also has a characteristic of the adhesion force returning to an original level by condensation. The polymer gel of the present invention preferably has adhesion properties even after the washing step, from the viewpoint of applicability to industrial fields that involve direct use for living organisms, cells, and the like (for example, cosmetic formulations, medical materials, and cell culture substrates).

[Examples]

The present invention will be described in more detail by showing Examples below, but the present invention is not limited to these Examples.

Compression test

A compression test was performed under the following conditions.

-    Apparatus: EZ-SX, Shimadzu Corporation
-    Measuring unit capable of measuring loads up to 500 N
-    Deformation rate: 1 mm/min
-    For the shape of a gel, a cylindrical specimen with a diameter of 15 mm was used as a test piece.

In the compression test, the relationship between displacement x and force F was measured. From an initial cross-sectional area A and a height H of a sample, a strain $\varepsilon$ and a stress $\sigma$ were calculated according to the following formula: $\varepsilon = x/H$, $\sigma = F/A$.

Tensile test

A tensile test was performed under the following conditions.

-    Apparatus: EZ-SX, Shimadzu Corporation
-    Measuring unit capable of measuring loads up to 10 N
-    Measurement temperature: 25°C
-    Deformation rate: 10 mm/min
-    For the shape of a gel, a rectangular specimen with a width of 9 mm, a thickness of 2 mm, and an initial length of a deformed region of approximately 10 mm (7 mm to 20 mm is possible) was used as a test piece.

In the tensile test, the relationship between the displacement x and the force F was measured three times for each test piece. From the initial cross-sectional area A and the height H of a sample, the strain $\varepsilon$ and the stress $\sigma$ were calculated according to the following formula: $\varepsilon = x/H$, $\sigma = F/A$.

Storage modulus G' and loss modulus G"

A dynamic storage modulus G' and a loss modulus G" were measured using a dynamic viscoelasticity measuring apparatus. The measurement conditions for G' and G" were as follows.

- Apparatus: MCR302, Anton Paar
- Measurement jig: flat plate
- Strain $\gamma$: 1%
- Angular frequency $\omega$: 0.1 to 10.0 rad·s$^{-1}$ -> Frequency dispersion

Loss tangent tan $\delta$

tan $\delta$ was calculated according to the formula tan $\delta$ = G"/G'.

Monomer reactivity ratios $r_1$ and $r_2$

A main monomer is set to $M_1$, and a crosslinking agent monomer is set to $M_2$. Monomer reactivity ratios $r_1$ and $r_2$ were defined as follows: $r_1 = k_{11}/k_{12}$, $r_2 = k_{22}/k_{21}$. Further, the definitions of $k_{11}$, $k_{12}$, $k_{22}$, and $k_{21}$ are as follows. In the growth process of a copolymerization reaction, when a growing species (that is, a monomer at the reactive end of a growing polymer) is $M_1^*$ or $M_2^*$, each growing species can be reacted with $M_1$ or $M_2$. Specifically, the rate constant of the process in which $M_1^*$ reacts with $M_1$ to generate $M_1^*$ was defined as $k_{11}$, the rate constant of the process in which $M_1^*$ reacts with $M_2$ to generate $M_2^*$ was defined as $k_{12}$, the rate constant of the process in which $M_2^*$ reacts with $M_1$ to generate $M_1^*$ was defined as $k_{21}$, and the rate constant of the process in which $M_2^*$ reacts with $M_2$ to generate $M_2^*$ was defined as $k_{22}$.

The monomer reactivity ratios $r_1$ and $r_2$ were determined by performing several polymerizations with various monomer ratios and relating the composition of a copolymer generated at the beginning of the polymerization to the charged monomer composition. The composition of the copolymer was specified by $^1$H-NMR. The charged monomer ratio was set to F = [$M_1$]/[$M_2$] and the ratio in a polymer was set to f = d[$M_1$]/d[$M_2$], and $r_1$ and $r_2$ were calculated using Formula 2 according to the Kelen-Tudos method.

[Math. 5]

$$\eta = \left(r_1 + \frac{r_2}{a}\right)\xi - \frac{r_2}{a} \qquad \text{(Formula 2)}$$

wherein a is a constant, and a geometric mean between the maximum value and the minimum value of $F^2/f$; in addition,

$$\eta = \frac{F(1-1/f)}{a+F^2/f}, \text{ and } \quad \xi = \frac{F^2/f}{a+F^2/f}.$$

Decomposition rate constant (10$^{-7}$ s$^{-1}$)

The decomposition rate was measured as follows. In a case of an azo-based radical polymerization initiator, the concentration of the polymerization initiator can be detected by measuring the absorbance derived from an azo group, and thus, the decomposition rate was determined by determining the rate of change in the polymerization initiator concentration at the reaction temperature. Alternatively, a decomposition rate $k_d$ is represented by the following Arrhenius equation (Formula 3), and thus was calculated using a value reported in literature. In Formula 3, A is a frequency factor, E (kJ·mol$^{-1}$·K$^{-1}$) is activation energy, and R is a gas constant.

[Math. 6]

$$k_d = A \cdot \exp\left(-\frac{E}{RT}\right) \qquad \text{(Formula 3)}$$

Adhesion force

Adhesion force was measured under the following conditions.

- Apparatus: EZ-SX, Shimadzu Corporation
- The state where a gel and a sample were separated was defined as force F = 0.
- The sample was adhered to the gel (F < 0), and the displacement was adjusted such that F = 0 (x = 0).

- The displacement was applied in a direction of peeling the sample off the gel, and the force was measured.
- Contact area: 1 cm $\times$ 1 cm

Example 1: Synthesis of viscous gel with ADIP

An imidazolium cationic radical polymerization initiator: ADIP (2,2'-azobis-(2-(1,3-dimethyl-4,5-dihydro-1H-imidazol-3-ium-2-yl))propane triflate) was used as a polymerization initiator, and a radical polymerization reaction was performed using MPC (2-methacryloyloxyethylphosphorylcholine) as a main monomer and MBAAm (N,N'-methylenebisacrylamide) as a crosslinking agent monomer to synthesize a gel. ADIP was synthesized according to the method described in Japanese Unexamined Patent Application Publication No. 2017-51113.
Specifically, the radical polymerization reaction was performed according to the following procedure: (i) the main monomer, the crosslinking agent monomer, and the radical polymerization initiator were dissolved in water (in a sample tube or a Falcon tube, appropriately in an ice bath); (ii) Ar bubbling was performed for five minutes (in an ice bath); (iii) a resulting mixture (a pre-gel solution) was put into a mold; and (iv) it was left at 25°C. The dose of each reagent was as shown in Table 1 below.

[Table 1]

Table 1: Reagents used to synthesize gel with ADIP polymerization initiator

| Reagent | Amount | Amount (mmol) | Molar ratio to addition amount of MPC (%) |
|---|---|---|---|
| MPC | 2.76 g | 9.4 | 100 |
| MBAAm | 1.6 mg | 0.010 | 0.11 |
| ADIP | 5.8 mg | 0.0096 | 0.10 |
| Water | 6 mL | | |

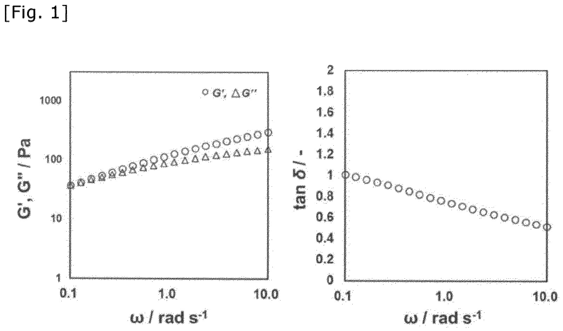

A polymer gel was able to be obtained by the above radical polymerization reaction. Further, the dynamic storage modulus G' and the loss modulus G" of the obtained gel were measured using a dynamic viscoelasticity measuring apparatus, and the results are shown in Fig. 1.
In the evaluation of the viscoelastic behavior of the gel obtained in Example 1, in a case where when the angular frequency $\omega$ (rad·s$^{-1}$) was changed from 0.1 to 10, the maximum value of the storage modulus G' was less than twice the minimum value, or the maximum value of tan $\delta$ was 0.1 or less, the gel was evaluated as "elastic", and in a case where when the angular frequency $\omega$ (rad·s$^{-1}$) was changed from 0.1 to 10, the maximum value of the storage modulus G' was more than or equal to twice the minimum value, and the maximum value of tan $\delta$ was more than 0.1, the gel was evaluated as "viscoelastic".
As a result, the maximum value of the dynamic storage modulus G' of the gel obtained in Example 1 was 8.0 times the minimum value, and the maximum value of tan $\delta$ was 1.0. That is, this gel exhibited viscoelastic behavior and was a polymer gel with high strength and high viscosity. Further, it has been found that this gel has higher viscosity than general elastic gels, and surprisingly, it has also been found that this gel is not brittle (unbreakable) and has a characteristic of excellent elongation.

Example 2: Investigation of conditions for viscous gel synthesis 2.1. Definition of viscosity index and investigation of monomer/crosslinking agent structure

In order to search for a gel that exhibits high strength and high viscosity behavior, gels were synthesized using various monomers and crosslinking agents, and the dynamic storage modulus G' and the loss modulus G" were measured.
In the evaluation of the viscoelastic behavior of the gels obtained in Example 2, as in Example 1, in the case where when the angular frequency $\omega$ (rad·s$^{-1}$) was changed from 0.1 to 10, the maximum value of the storage modulus G' was less than twice the minimum value, or the maximum value of tan $\delta$ was 0.1 or less, the gel was evaluated as "elastic", and in the case where when the angular frequency $\omega$ (rad·s$^{-1}$) was changed from 0.1 to 10, the maximum value of the storage modulus G' was more than or equal to twice the minimum value, and the maximum value of tan $\delta$ was more than 0.1, the gel was evaluated as "viscoelastic".
To synthesize the gels, APS/TEMED was used as a radical polymerization initiator, and a radical polymerization reaction was performed using the main monomers and the crosslinking agent monomers shown in Table 2. The polymerization reaction was performed under the conditions of [main monomer] = 1.5 M, [crosslinking agent monomer] = 6 mM (0.4% relative to the molar amount of the main monomer), and [APS/TEMED] = 15 mM for each (1% relative to the molar amount of the main monomer).

[Table 2]

Table 2: Combinations of monomers and crosslinking agents for polymerized gels

| Sample name | Main monomer | Main chain structure of monomer | Crosslinking agent monomer | Main chain structure of crosslinking agent |
|---|---|---|---|---|
| MPC/MB | MPC | Methacrylate | MBAAm | Acrylamide |
| mOEGMA/MB | mOEGMA | Methacrylate | MBAAm | Acrylamide |
| DMAAm/MB | DMAAm | Acrylamide | MBAAm | Acrylamide |
| MPC/PE | MPC | Methacrylate | PEGDM | Methacrylate |

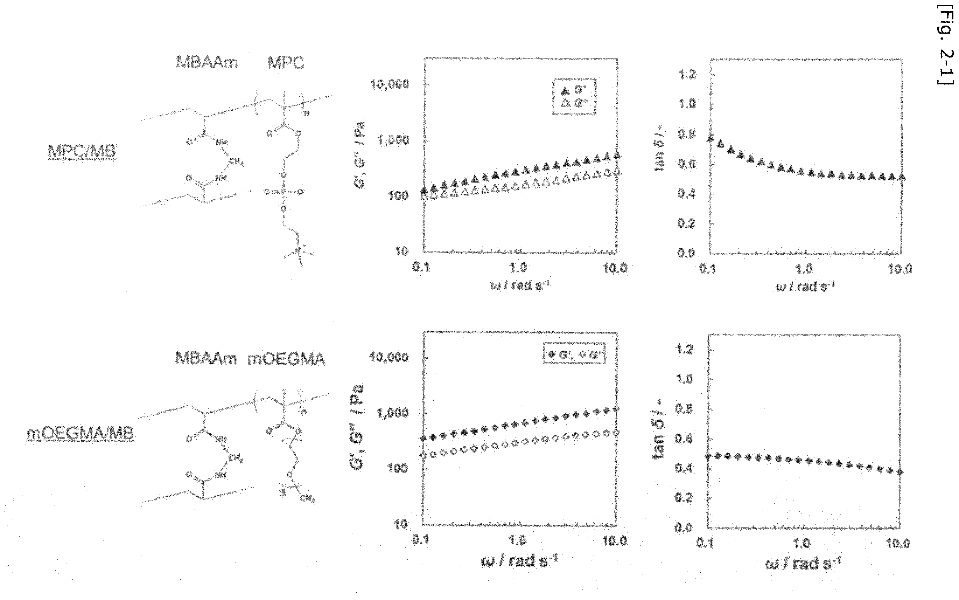

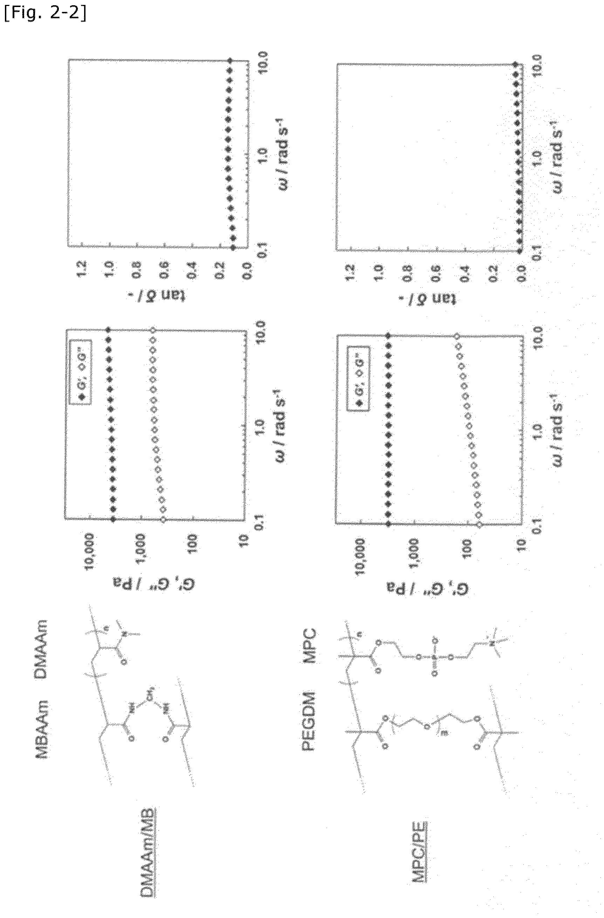

Dynamic viscoelasticity measurement was performed on the gels obtained under the conditions shown in Table 2. The results are shown in Fig. 2 and Table 3. In Example 2, a value obtained by dividing the maximum value of the storage modulus G' by the minimum value when the angular frequency $\omega$ (rad·s$^{-1}$) was changed from 0.1 to 10 is represented as "ratio of maximum value/minimum value of G'".

[Table 3]

Table 3: Evaluation of viscoelastic behavior of various gels

| Sample name | Ratio of maximum value/minimum value of G' | Maximum value of tan $\delta$ | Evaluation result of viscoelastic behavior |
|---|---|---|---|
| MPC/MB | 5.7 | 0.78 | Viscoelastic |
| mOEGMA/MB | 3.6 | 0.49 | Viscoelastic |
| DMAAm/MB | 1.4 | 0.15 | Elastic |
| MPC/PE | 1.1 | 0.052 | Elastic |

When the polymerization initiator APS/TEMED was used, polymer gels with high strength and high viscosity exhibiting viscoelastic behavior were also obtained in combinations of MPC and MBAAm, and mOEGMA and MBAAm. tan $\delta$ of these gels was 0.3 or more (considered to be a large value as compared with general chemical gels), and the frequency dependence was observed in the storage modulus. This indicates that the material is highly viscous, and it has been considered that the effect of physical crosslinking due to a non-covalent bond was observed in addition to chemical crosslinking. On the other hand, when DMAAm with an acrylamide main chain was used as the main monomer and MBAAm was used as the crosslinking agent monomer, and when MPC was used as the main monomer and PEGDM with a methacrylate main chain was used as the crosslinking agent monomer, gels exhibiting viscoelastic behavior were not able to be obtained, and brittle hard gels exhibiting elastic behavior were obtained. That is, it has been found that the combination of a main chain and a crosslinking agent generates one that becomes viscous, suggesting the possibility of independence of the skeleton of a monomer side chain. It has been shown that methacrylate and acrylamide are a preferred combination to obtain a polymer gel with higher strength and/or higher viscosity.

2.2. Quantification of combination of monomer and crosslinking agent

2.2.1. Mechanism consideration from viewpoint of reactivity

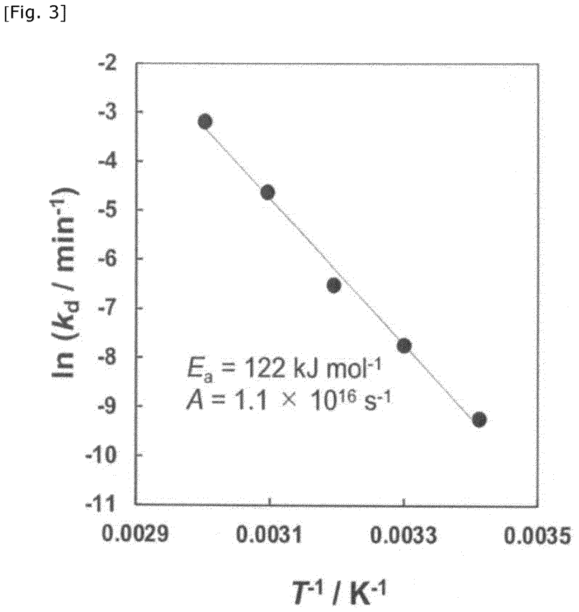

It was predicted that the increase in gel viscosity during radical polymerization was influenced by the reactivity of a crosslinking agent monomer and a main monomer during copolymerization. Thus, the reactivity of an acrylamide monomer and a methacrylate monomer was evaluated. Fig. 3 shows an Arrhenius plot of the decomposition rate as the reactivity of ADIP in water. The kinetic parameters for the decomposition were as follows: activation energy E = 122.9 kJ mol$^{-1}$, frequency factor: A = 1.1 $\times$ 10$^{16}$ s$^{-1}$.

(i) Homopolymerization

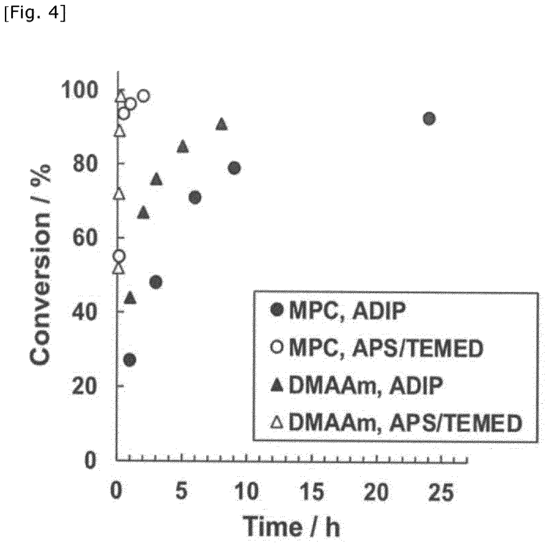

In homopolymerization, the polymerization of methacrylate proceeded more slowly than that of acrylamide when ADIP or APS/TEMED was used as the polymerization initiator (Fig. 4). Further, when ADIP was used, the polymerization proceeded more slowly than when APS/TEMED was used. This was considered to be due to the slow generation rate of radicals.

(ii) Copolymerization

The monomer reactivity ratios between MPC and an acrylamide monomer with a different backbone and between MPC and a methacrylate monomer with the same backbone were evaluated. Here,

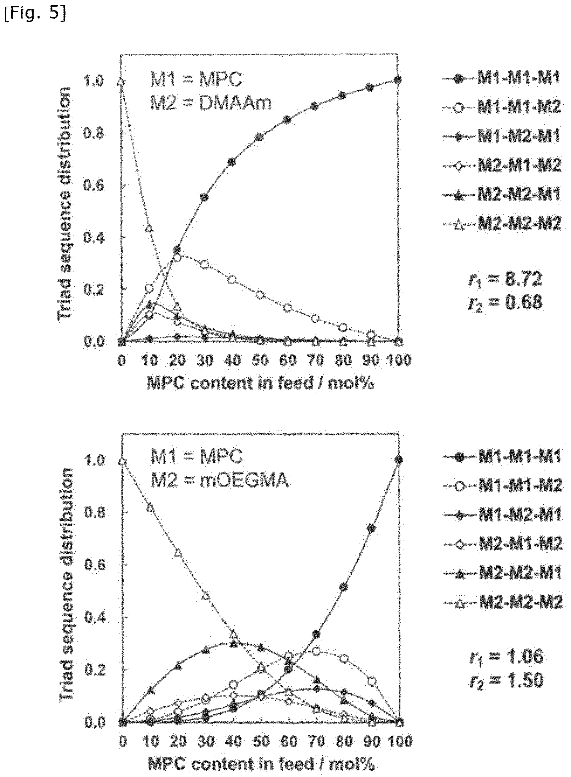

- Monomer A (MA) = MPC
- Monomer B (MB) = dimethylacrylamide DMAAm or oligoethylene glycol methacrylate mOEGMA, and
- Monomer reactivity ratio: $r_A = k_{AA}/k_{AB}$, $r_B = k_{BB}/k_{BA}$. A polymerization reaction was performed while changing the charging ratio, and the amount of introduction to a polymer was evaluated by $^1$H-NMR. Further, the monomer reactivity ratio was analyzed using the Kelen-Tudos method. The results are shown in Fig. 5. In Fig. 5, MA is represented as $M_1$, and MB is represented as $M_2$.

In the copolymerization of MPC and DMAAm, the results of $r_A = k_{AA}/k_{AB} = 8.72$ and $r_B = k_{BB}/k_{BA} = 0.68$ were obtained. This indicates that MPC with a methacrylate structure is likely to be continuous while DMAAm with an acrylamide structure is likely to be dispersed. On the other hand, in the copolymerization of MPC and mOEGMA, both of which have a methacrylate structure, the results of $r_A = k_{AA}/k_{AB} = 1.06$ and $r_B = k_{BB}/k_{BA} = 1.50$ were obtained. Both reactivities were close to 1, indicating that the monomers are introduced at random to some degree as long as the skeletons are the same.

From these results, in a case where for the above monomer A and the above monomer B, $r_A > r_B$, and further, $r_A > 1$ and $r_B < 1$, a combination of reactivities in which the above monomer B was likely to be dispersed was provided. It has been considered that these reactivities greatly affect the structure of a basic main chain, and thus, the monomer A and the monomer B are appropriately selected such that $r_A > r_B$ is also established between the main monomer corresponding to the above monomer A and the crosslinking agent monomer having the same main chain structure as the above monomer B, and still more preferably, $r_A > 1$ and $r_B < 1$ are established to allow the positions of a crosslinking agent in a desired gel structure to be dispersed more, and as a result, a gel exhibiting viscoelastic behavior is obtained.

2.3. Concentration of crosslinking agent monomer

2.3.1. Effect of ratio between polymerization initiator and crosslinking agent monomer in polymerization reaction with APS/TEMED polymerization initiator and mOEGMA monomer

In order to change the crosslinking density of a gel, in the polymerization reaction with an APS/TEMED polymerization initiator, the ratio of the crosslinking agent monomer to the main monomer was changed to measure the dynamic storage modulus G' and the loss modulus G" of each obtained gel.

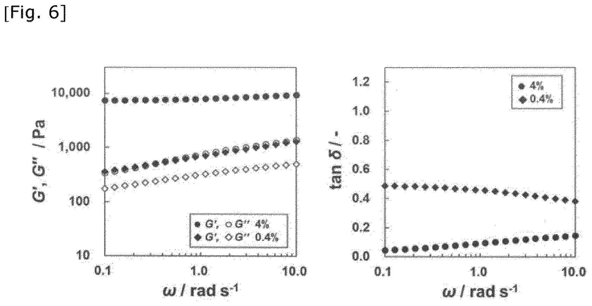

As the main monomer, mOEGMA was used, and as the crosslinking agent monomer, MBAAm was used. The polymerization reaction was performed under the conditions of [main monomer mOEGMA] = 1.5 M, [crosslinking agent monomer MBAAm] = 60.6 mM (4% and 0.4% relative to the molar amount of mOEGMA, respectively), and [APS/TEMED] = 15 mM for each (1% relative to the molar amount of mOEGMA). The results of dynamic viscoelasticity measurement of the obtained gels are shown in Fig. 6 and Table 4.

[Table 4]

Table 4: Evaluation of viscoelastic behavior of mOEGMA-MBAAm gel

| Molar ratio of addition amount of MBAAm to addition amount of mOEGMA (%) | Ratio of maximum value/ minimum value of G' | Maximum value of tan δ | Evaluation result of viscoelastic behavior |
|---|---|---|---|
| 4 | 1.3 | 0.15 | Elastic |
| 0.4 | 3.6 | 0.49 | Viscoelastic |

From the above results, it has been found that a polymer gel with high strength and high viscosity can be obtained when the molar ratio of the addition amount of the crosslinking agent monomer MBAAm to the addition amount of the main monomer mOEGMA is 1% or less.

2.3.2. Effect of ratio between polymerization initiator and crosslinking agent monomer in polymerization reaction with APS/TEMED polymerization initiator and MPC monomer

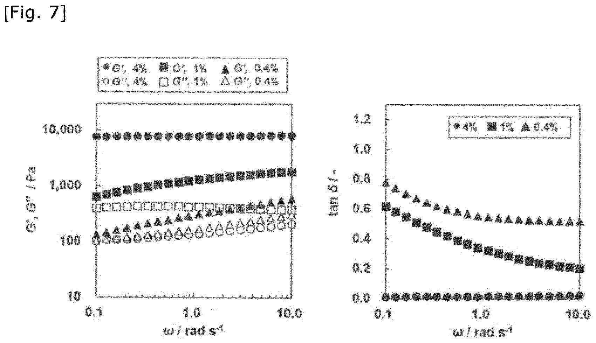

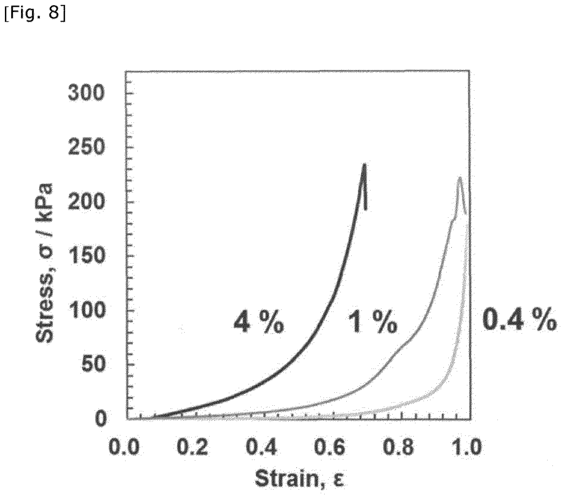

In order to change the crosslinking density of a gel, in the polymerization reaction with an APS/TEMED polymerization initiator, the ratio of the crosslinking agent monomer to the main monomer was changed to measure the dynamic storage modulus G' and the loss modulus G" of each obtained gel. MPC was used as the main monomer, and MBAAm was used as the crosslinking agent monomer. The molar ratio of the addition amount of APS/TEMED to the addition amount of MPC was 1%. The results of dynamic viscoelasticity measurement of the obtained gels are shown in Table 5 and Fig. 7. Further, the results of a compression test of the gels are shown in Fig. 8.

[Table 5]

Table 5: Dynamic viscoelasticity of polymer

| Molar ratio of addition amount of MBAAm to addition amount of MPC (%) | Ratio of maximum value/ minimum value of G' | Maximum value of tan δ | Evaluation result of viscoelastic behavior |
|---|---|---|---|
| 4% | 1.1 | 0.026 | Elastic |
| 1% | 2.9 | 0.62 | Viscoelastic |
| 0.4% | 5.7 | 0.78 | Viscoelastic |

From the results of dynamic viscoelasticity measurement, in a gel in which the molar ratio of the addition amount of MBAAm to the addition amount of MPC (hereinafter may be referred to as the crosslinking agent molar ratio) was 1% or 0.4%, viscoelastic behavior was observed, and a polymer gel with high strength and high viscosity was obtained. However, when the crosslinking agent molar ratio was increased to 4%, viscoelastic behavior was no longer observed, resulting in a chemical gel exhibiting general elastic behavior. From these results, it has been shown that the polymer gel with high strength and high viscosity is obtained when the molar ratio of the addition amount of the crosslinking agent monomer MBAAm to the addition amount of the main monomer MPC is 1% or less.

In addition, in the graph shown in Fig. 8, the plot on the left is for a gel having a crosslinking agent molar ratio of 4%, the middle plot is for a gel having a crosslinking agent molar ratio of 1%, and the plot on the right is for a gel having a crosslinking agent molar ratio of 0.4%. In the graph shown in Fig. 8, the vertical axis represents the strength of stress, and the horizontal axis represents strain at a breaking point. From the results of the compression test shown in Fig. 8, it has been found that when the crosslinking agent molar ratio is 1% or less, a polymer gel with high strength and high viscosity having a characteristic of not being brittle (being unbreakable) is obtained.

Example 3: Adhesion properties of viscous gel to solid material and living organism

An adhesive property (adhesion force) test was performed on the gels obtained with the APS/TEMED polymerization initiator in 2.3.2. of Example 2 above.

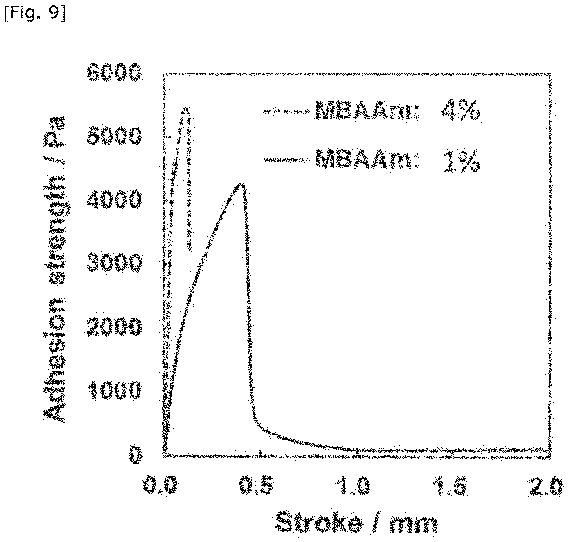

Fig. 9 shows the results of the adhesion test. In the gel in which the viscoelastic behavior was observed and the crosslinking agent molar ratio was 1% in 2.3.2. of Example 2, an adhesion force to a glass substrate of 200 ($N/m^2$ = Pa) or more was exhibited, and a peeling distance of 0.3 mm or more was exhibited. On the other hand, in the gel in which no viscoelastic behavior was observed and the crosslinking agent molar ratio was 4% in 2.3.2. of Example 2, an adhesion force to glass of 200 ($N/m^2$ = Pa) or more was exhibited, but the glass peels off immediately, and the peeling distance was less than 0.3 mm. That is, in 2.3.2. of Example 2, the gel having a crosslinking agent molar ratio of 1% has adhesion properties significantly superior to the gel having a crosslinking agent molar ratio of 4%.

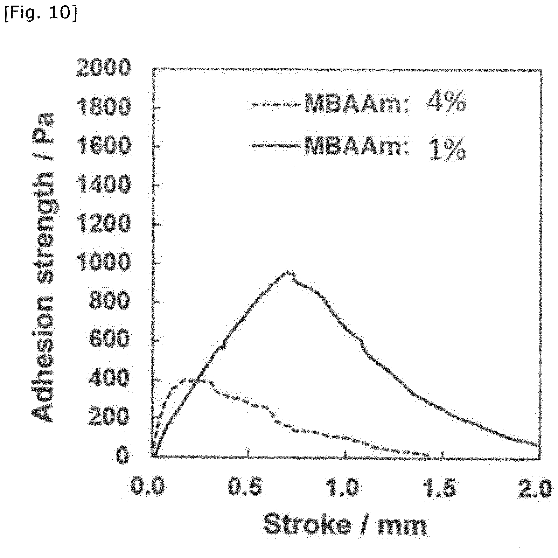

Further, when chicken skin was used as a substrate for a skin model, the gel having a crosslinking agent molar ratio of 1% exhibited a longer peeling distance than and an adhesion force more than or equal to twice the gel having a crosslinking agent molar ratio of 4% (Fig. 10).

Therefore, it has been found that the gel having a crosslinking agent molar ratio of 1% has better adhesion properties than the gel having a crosslinking agent molar ratio of 4%.

Example 4: Polymerization initiator to be used

Parameters related to the decomposition rates of polymerization initiators used in the above examples are summarized in Table 6 below.

[Table 6]

| Table 6: Parameters related to decomposition rates of polymerization initiators | | | | |
|---|---|---|---|---|
| Polymerization initiator | V-50 | VA-044 | ADIP | APS/TEMED |
| Decomposition rate at 25°C ($10^{-7}$/s) | 1.7 | 14 | 32 | $1.3 \times 10^9$ |

In the above examples, a gel having preferable physical properties is obtained when ADIP and APS/TEMED are used, and the decomposition rate of a polymerization initiator is considered to be important for the crosslinking density and the crosslink distribution in a gel, and thus it has been considered that the decomposition rate ($10^{-7}$/s) at 25°C of a polymerization initiator to be used is preferably 25 or more, and more preferably 30 or more.

Example 5: Synthesis of viscoelastic gel with N,N'-Foxybis(2,1-ethanediyloxy-3,1-propanediyl)lbisacrylamide (OBAAm)

A gel was synthesized by performing a radical polymerization reaction with MPC (2-methacryloyloxyethyl phosphorylcholine) as a main monomer and OBAAm as a crosslinking agent monomer. APS/TEMED was used as a polymerization initiator. The polymerization reaction was performed under the conditions of [main monomer MPC] = 1.5 M, [crosslinking agent monomer MBAAm] = 15.6 mM (1% and 0.4% relative to the molar amount of MPC, respectively), and [APS/TEMED polymerization initiator] = 15 mM (1% relative to the molar amount of MPC).

Specifically, the radical polymerization reaction was performed according to the following procedure: (i) the main monomer, the crosslinking agent monomer, and the radical polymerization initiator were dissolved in water (in a sample tube or a Falcon tube, appropriately in an ice bath); (ii) a resulting mixture (a pre-gel solution) was put into a mold; and (iii) it was left at 25°C.

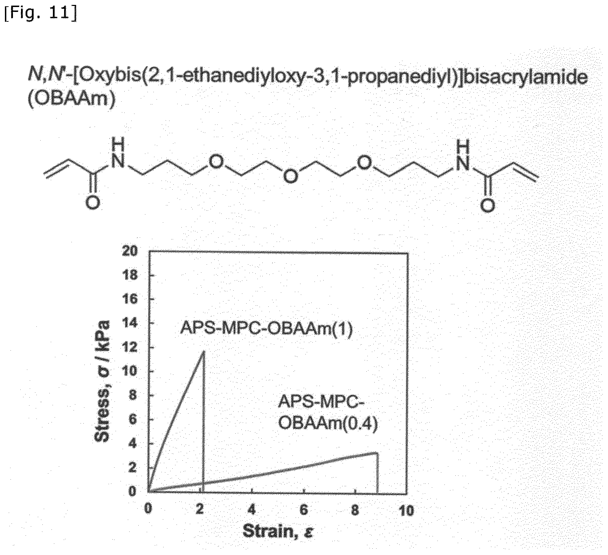

Hereinafter, a gel having a molar ratio of the crosslinking agent monomer OBAAm of 1% is referred to as APS-MPC-OBAAm (1), and a gel having a molar ratio of the crosslinking agent monomer OBAAm of 0.4% is referred to as APS-MPC-OBAAm (0.4). The tensile test results for the two obtained gels are shown in Fig. 11.

In the graph shown in Fig. 11, the vertical axis represents the strength of stress, and the horizontal axis represents strain at a breaking point. It has been clarified that a polymer gel with high strength and high viscosity that has a characteristic of being unbreakable (not being brittle) is obtained when the stress is 1 kPa or more or the strain is 2 or more. It has been found from the results of the tensile test shown in Fig. 11 that this gel was obtained by changing the crosslinking agent monomer from MBAAm to OBAAm, which was a monomer with a relatively large structure, and performing polymerization, among the gels obtained in Example 2 (sample names: MPC/PE and MPC/MB), and all of the obtained gels had a strain of 2 or more at the breaking point and were polymer gels with high strength and high viscosity having a characteristic of being unbreakable (not being brittle).

Example 6: Calculation of reactivity ratios of main monomers and crosslinking agent monomer

Reactivity ratios of main monomers and a crosslinking agent monomer were calculated by performing $^1$H-NMR measurement (JEOL ECS-400 spectrometer) with the Kelen-Tudos method described above.

The reactivity ratios of the main monomers and the crosslinking agent monomer were calculated according to the following procedure.

1. The main monomer (DMAAm, MPC, or mOEGMA) and the crosslinking agent monomer (MBAAm) were dissolved in water (total monomer concentration = 0.35 M, volume = 3 mL, a 15 mL Falcon tube was used).
2. To confirm the ratio before the measurement, 60 $\mu$L was sampled, and further diluted with 500 $\mu$L of $D_2O$, and $^1$H-NMR measurement was performed (measurement (1): before reaction).
3. ADIP was added to the solution of 1. (3.5 mM).
4. Ar bubbling was performed for five minutes.
5. The lid of the 15 mL Falcon tube was closed and left at 25°C.
6. After two hours, 60 $\mu$L was sampled, and further diluted with 500 $\mu$L of $D_2O$, and $^1$H-NMR measurement was performed (measurement (2): two hours after reaction).

Results

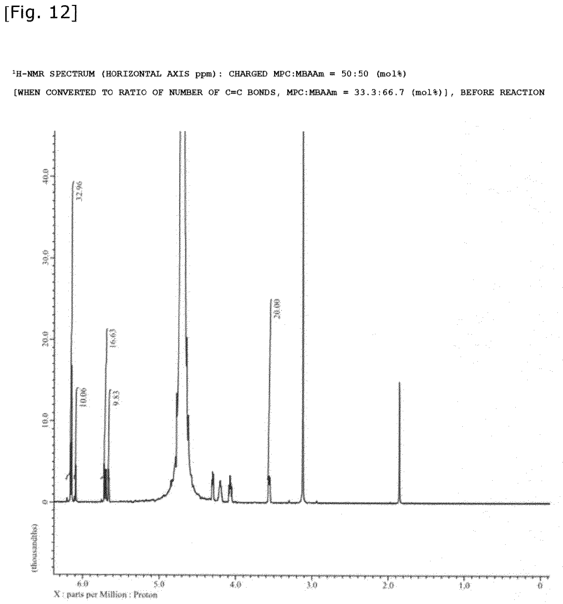

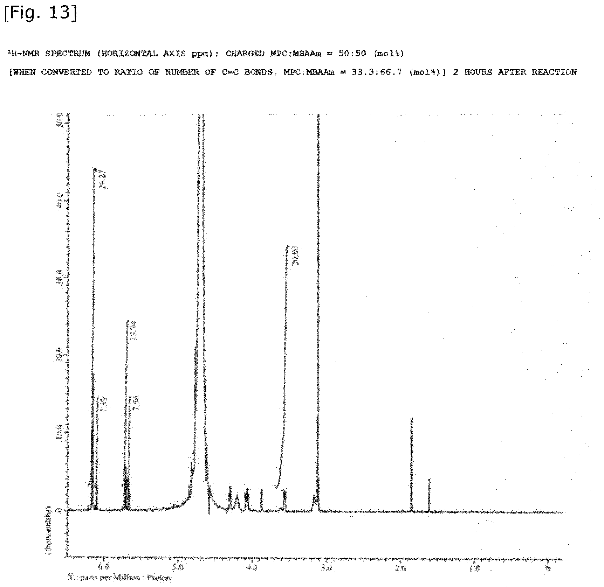

For the measurement (1) and the measurement (2), as representative examples, the results when measurement was performed using MPC as a main monomer and MBAAm as a crosslinking agent monomer are shown in Figs. 12 and 13.

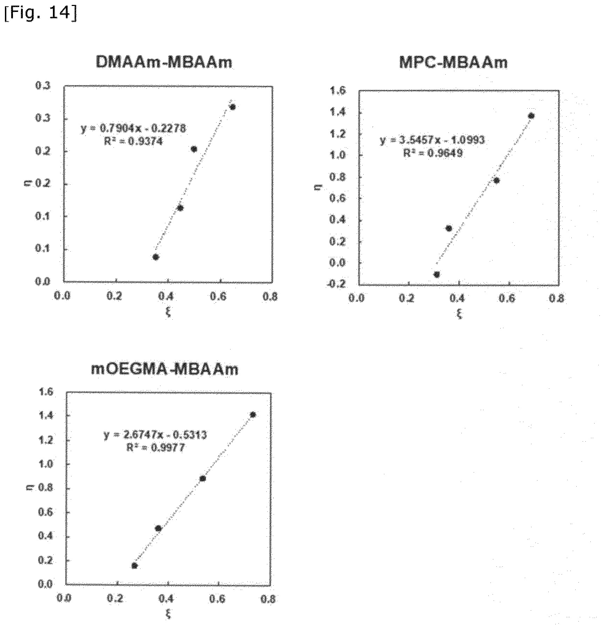

For each combination of the main monomer (DMAAm, MPC, or mOEGMA) and the crosslinking agent monomer (MBAAm), the consumption amount was tracked by $^1$H-NMR while changing a charge as shown in Table 7 below. The plots obtained from the analysis are shown in Fig. 14. Note that $\eta$ on the vertical axis and $\xi$ on the horizontal axis indicate dimensionless numbers defined by Math. 2.

[Table 7]

| Table 7: Ratio of number of charged C=C bonds before reaction, and ratio of introduction to polymer chain by consumption amount after reaction, calculated from $^1$H-NMR measurement | | | | |
|---|---|---|---|---|
| M1 = DMAAm M2 = MBAAm | Before reaction (ratio of number of C=C bonds) | | After reaction (ratio of introduction to polymer chain by consumption amount) | |
| | M1 | M2 | M1 | M2 |
| | 94.6 | 5.4 | 89.1 | 10.9 |
| | 91.0 | 9.0 | 83.8 | 16.2 |
| | 86.8 | 13.2 | 72.8 | 27.2 |
| | 79.8 | 20.2 | 58.9 | 41.1 |
| M1 = MPC M2 = MBAAm | Before reaction (ratio of number of C=C bonds) | | After reaction (ratio of introduction to polymer chain by consumption amount) | |
| | M1 | M2 | M1 | M2 |
| | 83.4 | 16.6 | 91.6 | 8.4 |
| | 69.8 | 30.2 | 80.9 | 19.1 |
| | 51.7 | 48.3 | 66.4 | 33.6 |
| | 37.9 | 62.1 | 44.4 | 55.6 |
| M1= mOEGMA M2 = MBAAm | Before reaction (ratio of number of C=C bonds) | | After reaction (ratio of introduction to polymer chain by consumption amount) | |
| | M1 | M2 | M1 | M2 |
| | 84.2 | 15.8 | 91.9 | 8.1 |
| | 69.1 | 30.9 | 82.6 | 17.4 |
| | 53.2 | 46.8 | 71.3 | 28.7 |
| | 40.8 | 59.2 | 58.5 | 41.5 |

The slope and the intercept of an approximate straight line were calculated from the plots in Fig. 14. Specifically, the calculation was performed based on Formula 2 where the slope of the approximate straight line is $r_1 + r_2/a$ and the intercept is $-r_2/a$. The reactivity ratio for each combination of the main monomer (DMAAm, MPC, or mOEGMA) and the crosslinking agent monomer (MBAAm) is shown in Table 8 below.

[Table 8]

Table 8: Values of monomer reactivity ratios of main monomers and crosslinking agent monomer

| Main monomer | | | Crosslinking agent monomer | | | | | |
|---|---|---|---|---|---|---|---|---|
| Abbrevi- ation | Main chain structure | Property | Abbrevi- ation | Main chain structure | Property | $r_1$ | $r_2$ | Evaluation of viscoelasticity |
| MPC | Methacrylate | Zwitterionic | MBAAm | Acrylamide | Nonionic | 2.36 | 1.10 | Viscoelastic |
| mOEGMA | Methacrylate | Nonionic | MBAAm | Acrylamide | Nonionic | 2.11 | 0.49 | Viscoelastic |
| DMAAm | Acrylamide | Nonionic | MBAAm | Acrylamide | Nonionic | 0.56 | 4.56 | Elastic |

Example 7: Tensile test

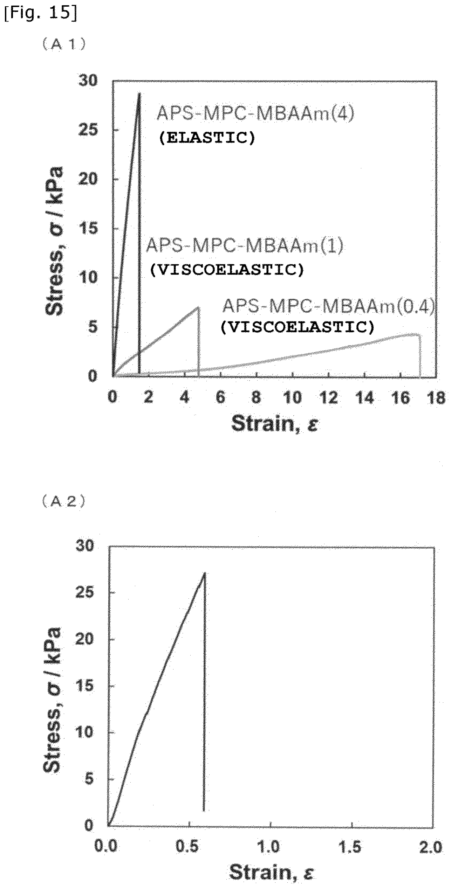

The tensile test results for the gel obtained in Example 2.3.2. (the gel with MPC as a main monomer, MBAAm as a crosslinking agent monomer, and APS/TEMED as a polymerization initiator) are shown in Fig. 15 (A1). In Fig. 15 (A1), the gel having a molar ratio of MBAAm of 4% is represented as APS-MPC-MBAAm (4), the gel having a molar ratio of 1% is represented as APS-MPC-MBAAm (1), and the gel having a molar ratio of 0.4% is represented as APS-MPC-MBAAm (0.4). In addition, a tensile test was similarly performed on MPC/PE (hereinafter referred to as APS-MPC-PEGDM), which was found to be a brittle elastic gel in Example 2.1., and the results are shown in Fig. 15 (A2).

In each of the graphs A1 and A2 shown in Fig. 15, the vertical axis indicates the strength of stress, and the horizontal axis indicates strain at a breaking point. It has been found from the results of the tensile test shown in Fig. 15 that the polymer gel with high strength and high viscosity obtained in Example 2 has a strain at the breaking point of 2 or more in the tensile test, and with this characteristic, has a characteristic of being unbreakable (not being brittle).

Example 8: Relationship between elastic modulus and breaking strength

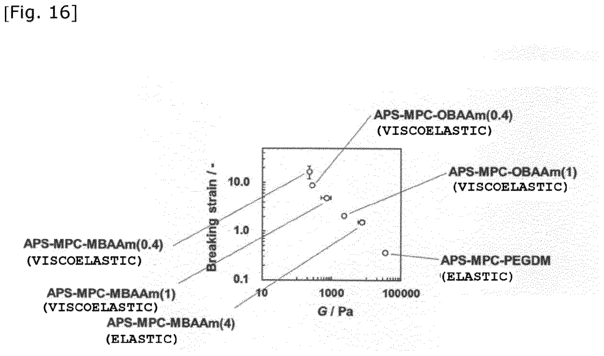

The elastic modulus and the breaking strain obtained from the stress-strain curve of each gel shown in Figs. 11 and 15 were plotted for each gel, and trends in the correlation with synthesis conditions were investigated. The results are shown in Fig. 16.

As shown in Fig. 16, it has been found that a combination of MPC and an acrylamide crosslinking agent provides a gel that is soft and has excellent deformability.

Further, it has been found that the relationship between the elastic modulus G and the breaking strain is approximately a linear relationship in a log-log plot, and as the elastic modulus becomes smaller than approximately 2300 Pa, the breaking strain increases. That is, it has been found that a gel having a breaking strain of 1 or more and an elastic modulus of 2300 Pa or less is soft and has excellent deformability.

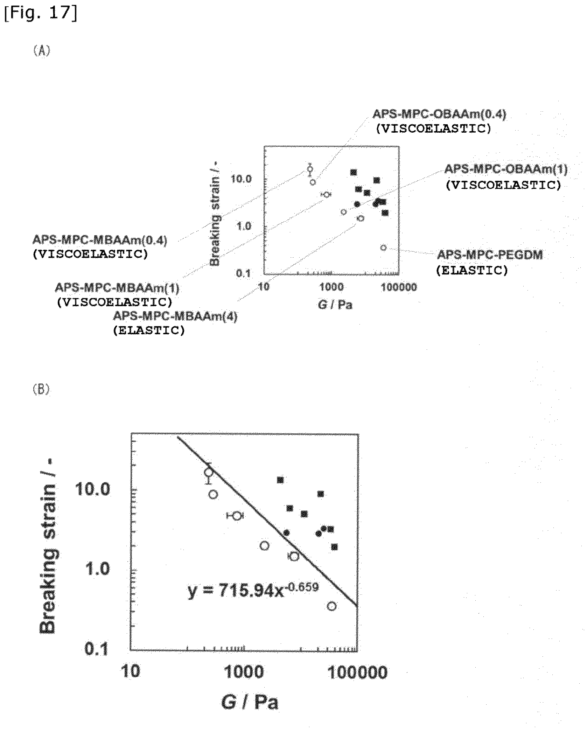

Next, a comparison was made with a gel (polymerized with APS, the main monomer was MPC or DMAAm, the crosslinking agent monomer was MBAAm, the former is referred to as known literature APS-MPC-MBAAm, and the latter is referred to as known literature APS-DMAAm-MBAAm) disclosed in known literature (Norioka et al. NPG Asia Materials (2021) 13:34). The values of the elastic modulus and the breaking strain in the tensile test of the gel disclosed in the above literature were superimposed and plotted on the elastic modulus-breaking strain plot in Fig. 16. The known literature APS-MPC-MBAAm was plotted as •, and the known literature APS-DMAAm-MBAAm was plotted as ■. The results are shown in Fig. 17.

As shown in Fig. 17(A), all the gels known in the literature are out of the range of a breaking strain of 1 or more and an elastic modulus of 2300 Pa or less, and it is obvious in the literature that they have higher strength than normal gels, but it has been shown that they have no characteristics of a gel that is soft and has excellent deformability.

In addition, it has been shown that among the gels shown in Fig. 17(A), a gel satisfying the following Formula 5 has a characteristic of a gel that has a lower elastic modulus and thus can be deformed even by small external force, and has a large breaking strain and can withstand large deformation when the breaking strain is set to λ and the elastic modulus is set to G (Fig. 17(B)).

[Math. 7]

$$\lambda \leq 715.94\ G^{(-0.659)} \qquad \text{(Formula 5)}$$

Example 9: Amount of water in produced gel

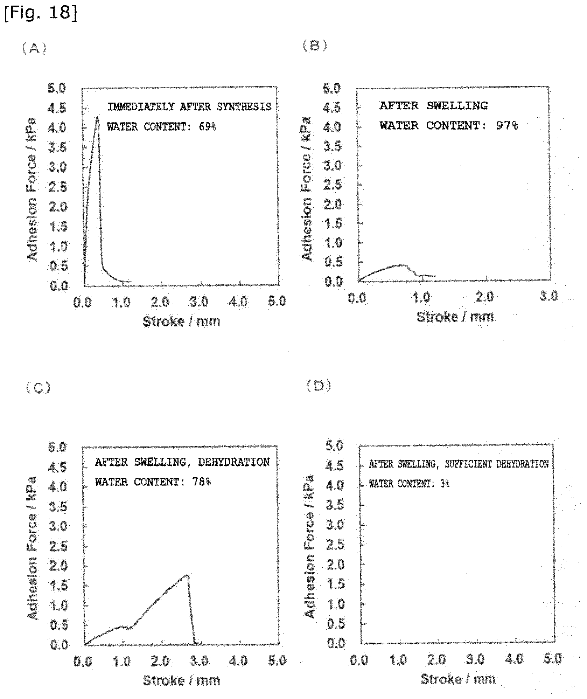

To synthesize a gel, a radical polymerization reaction was performed using APS/TEMED as a radical polymerization initiator, MPC as a main monomer, and MBAAm as a crosslinking agent monomer. The polymerization reaction was performed under the conditions of [main monomer] = 1.5 M, [crosslinking agent monomer] = 15 mM (1% relative to the molar amount of the main monomer), and [APS/TEMED polymerization initiator] = 15 mM (1% relative to the molar amount of the main monomer). The present polymerized gel was equivalent to the gel shown in Example 2.3.2. in which the ratio of the crosslinking agent monomer MBAAm to the main monomer was 1%, exhibited the physical properties of a polymer gel with high strength and high viscosity, and exhibited strong adhesion force to glass (Fig. 18(A)).

To remove unreacted substances from the polymerized gel, the gel was immersed in water for two days, and then dried in a desiccator or in an oven (90°C) to evaporate and remove a certain amount of water from the gel. Thereafter, the weight of the gel and the weight of the gel after being sufficiently dried were measured to determine the water content. The water content was calculated according to Formula 4.

Fig. 18 shows the adhesion force to a glass substrate for each water content. In Fig. 18, the stroke (mm) indicates the displacement applied from a state in which the gel was in contact with an adherend during the tensile test, and the adhesion force (kPa) indicates the adhesion force of the gel to the glass.

The polymer gel obtained even with a water content of 97% exhibits an adhesion force of 200 ($N/m^2$ = Pa) or more (Fig. 18(B)), and as the water content is reduced by further drying, the adhesion force to the glass substrate gradually becomes stronger (Fig. 18(C)) and the peeling distance exhibits 0.3 mm or more. It has been clarified that when the amount of water is further reduced and the water content becomes approximately 3%, the adhesion force completely disappears (Fig. 18(D)), and maintaining a certain level of water content is a necessary condition for the generation of adhesion force.

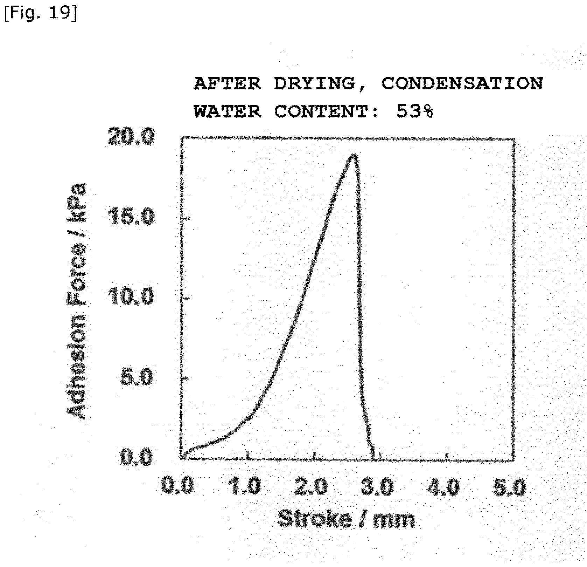

However, it has been clarified that dropping water again onto a sufficiently dried gel with a water content of approximately 3% for condensation increases the adhesion force again, as shown in Fig. 19 (the vertical axis and the horizontal axis are the same as Fig. 18). The water content at the time of condensation was 53%. The present properties of the gel are significantly effective in industrial applications, and it has been shown that transporting a material to a desired place in a dried state and adding necessary water during use provides a polymer gel with high strength and high viscosity that has controllable adhesion properties.

**Claims**

1. A polymer gel comprising

   a structure derived from a main monomer M1, a crosslinking agent monomer M2, and a radical polymerization initiator I as a constituent element, wherein
   a monomer reactivity ratio $r_1$ of the main monomer M1 and a monomer reactivity ratio $r_2$ of the crosslinking agent monomer M2 satisfy a condition of $r_1 > r_2$,
   a molar ratio of an addition amount of the crosslinking agent monomer M2 to an addition amount of the main monomer M1 is 1% or less, and
   a decomposition rate ($10^{-7}$/s) of the radical polymerization initiator I at 25°C is 25 or more.

2. The polymer gel according to claim 1, wherein the monomer reactivity ratio $r_1$ of the main monomer M1 and the monomer reactivity ratio $r_2$ of the crosslinking agent monomer M2 further satisfy conditions of $r_1 > 1$ and $r_2 < 1$.

3. The polymer gel according to claim 1, wherein at 25°C, a maximum value of tan $\delta$ at an angular frequency $\omega$ (rad·s$^{-1}$) of 0.1 to 10 is 0.1 or more, and a maximum value of a storage modulus G' when the angular frequency $\omega$ (rad·s$^{-1}$) is changed from 0.1 to 10 is more than or equal to twice a minimum value.

4. The polymer gel according to claim 1, wherein a strain ($\varepsilon$) at a breaking point in a compression test is 0.8 or more at 25°C.

5. The polymer gel according to claim 1, wherein a strain ($\varepsilon$) at a breaking point in a tensile test is 2 or more at 25°C.

6. The polymer gel according to claim 1, wherein at 25°C, an elastic modulus (G) is 2300 Pa or less, and a strain ($\varepsilon$) at a breaking point is 1 or more in a tensile test.

7. The polymer gel according to claim 1, wherein a water content is 4 to 97% at 25°C.

8. The polymer gel according to claim 1, wherein $r_1 > 3$ and $r_2 < 0.7$.

9. The polymer gel according to claim 1, wherein a product of $r_1$ and $r_2$, $r_1 \cdot r_2$, is 2 or more.

10. The polymer gel according to claim 1, wherein a combination of the main monomer M1 and the crosslinking agent monomer M2 is a combination of methacrylamide and acrylamide, or a combination of methacrylate and acrylamide.

11. The polymer gel according to claim 1, wherein

    the main monomer M1 is a monomer selected from the group consisting of MPC (2-methacryloyloxyethyl phosphorylcholine), mOEGMA (oligoethylene glycol methacrylate), MTAC (methacrylatoethyl trimethyl ammonium chloride), SPM (potassium 3-(methacryloyloxy)propanesulfonate), and MDBS (4-[(3-methacrylamidopropyl)dimethylammonio]butane-1-sulfonate), and
    the crosslinking agent monomer M2 is a monomer selected from the group consisting of MBAAm (N,N'-methylenebisacrylamide), OBAAm (N,N'-[oxybis(2,1-ethanediyloxy-3,1-propanediyl)]bisacrylamide), and PEGDM (polyethylene glycol dimethacrylate).

12. The polymer gel according to claim 1, wherein the radical polymerization initiator I is ADIP (2,2'-azobis-(2-(1,3-dimethyl-4,5-dihydro-1H-imidazol-3-ium-2-yl))propane triflate) or APS/TEMED (ammonium persulfate/N,N,N',N'-tetramethylethylenediamine).

13. The polymer gel according to claim 1, which has an adhesion property.

14. The polymer gel according to claim 1, wherein the main monomer M1 is methacrylate.

15. A method for producing the polymer gel according to any one of claims 1 to 14, the method comprising

a step of performing a polymerization reaction with the main monomer M1, the crosslinking agent monomer M2, and the radical polymerization initiator I, wherein
a molar ratio of an addition amount of the crosslinking agent monomer M2 to an addition amount of the main monomer M1 is 1% or less.

16. The method according to claim 15, wherein the polymerization reaction is performed at a temperature of 35°C or less.

17. A polymer gel comprising

a structure derived from a main monomer M1, a crosslinking agent monomer M2, and a radical polymerization initiator I as a constituent element, wherein
a monomer reactivity ratio $r_1$ of the main monomer M1 and a monomer reactivity ratio $r_2$ of the crosslinking agent monomer M2 satisfy a condition of $r_1 > r_2$,
a molar ratio of a content of the crosslinking agent monomer M2 to a content of the main monomer M1 is 1% or less, and
a decomposition rate ($10^{-7}$/s) of the radical polymerization initiator I at 25°C is 25 or more.

[Fig. 1]

[Fig. 2-1]

EP 4 442 717 A1

[Fig. 2-2]

[Fig. 3]

[Fig. 4]

[Fig. 5]

[Fig. 6]

[Fig. 7]

[Fig. 8]

[Fig. 9]

[Fig. 10]

[Fig. 11]

*N,N'*-[Oxybis(2,1-ethanediyloxy-3,1-propanediyl)]bisacrylamide
(OBAAm)

[Fig. 12]

¹H-NMR SPECTRUM (HORIZONTAL AXIS ppm): CHARGED MPC:MBAAm = 50:50 (mol%)

[WHEN CONVERTED TO RATIO OF NUMBER OF C=C BONDS, MPC:MBAAm = 33.3:66.7 (mol%)], BEFORE REACTION

[Fig. 13]

¹H-NMR SPECTRUM (HORIZONTAL AXIS ppm): CHARGED MPC:MBAAm = 50:50 (mol%)

[WHEN CONVERTED TO RATIO OF NUMBER OF C=C BONDS, MPC:MBAAm = 33.3:66.7 (mol%)] 2 HOURS AFTER REACTION

[Fig. 14]

[Fig. 15]

(A 1)

(A 2)

[Fig. 16]

[Fig. 17]

(A)

(B)

[Fig. 18]

(A)

IMMEDIATELY AFTER SYNTHESIS
WATER CONTENT: 69%

(B)

AFTER SWELLING
WATER CONTENT: 97%

(C)

AFTER SWELLING, DEHYDRATION
WATER CONTENT: 78%

(D)

AFTER SWELLING, SUFFICIENT DEHYDRATION
WATER CONTENT: 3%

[Fig. 19]

AFTER DRYING, CONDENSATION
WATER CONTENT: 53%

<table>
<tr><td colspan="2" align="center">**INTERNATIONAL SEARCH REPORT**</td><td colspan="2">International application No.<br><br>**PCT/JP2022/044594**</td></tr>
<tr><td colspan="4">**A.    CLASSIFICATION OF SUBJECT MATTER**<br><br>*C08F 220/00*(2006.01)i; *C08F 220/12*(2006.01)i; *C08F 220/54*(2006.01)i; *C08F 220/56*(2006.01)i; *C08F 230/02*(2006.01)i;<br>*C08F 236/20*(2006.01)i<br>FI:    C08F220/00; C08F220/12; C08F220/54; C08F220/56; C08F230/02; C08F236/20<br><br>According to International Patent Classification (IPC) or to both national classification and IPC</td></tr>
<tr><td colspan="4">**B.    FIELDS SEARCHED**</td></tr>
<tr><td colspan="4">Minimum documentation searched (classification system followed by classification symbols)<br><br>    C08F220/00; C08F220/12; C08F220/54; C08F220/56; C08F230/02; C08F236/20</td></tr>
<tr><td colspan="4">Documentation searched other than minimum documentation to the extent that such documents are included in the fields searched<br><br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023</td></tr>
<tr><td colspan="4">Electronic data base consulted during the international search (name of data base and, where practicable, search terms used)</td></tr>
<tr><td colspan="4">**C.    DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>X</td><td colspan="2">JP 2020-180240 A (KANSAI UNIVERSITY) 05 November 2020 (2020-11-05)<br>    claims, examples, etc.</td><td>1-17</td></tr>
<tr><td>A</td><td colspan="2">JP 2020-180239 A (KANSAI UNIVERSITY) 05 November 2020 (2020-11-05)</td><td>1-17</td></tr>
<tr><td>A</td><td colspan="2">US 2020/0277450 A1 (TECHNION RESEARCH & DEVELOPMENT FOUNDATION LTD.)<br>03 September 2020 (2020-09-03)</td><td>1-17</td></tr>
<tr><td>A</td><td colspan="2">US 2006/0127878 A1 (SALOMON, David Henry) 15 June 2006 (2006-06-15)</td><td>1-17</td></tr>
<tr><td>A</td><td colspan="2">JP 2019-065005 A (KIRIN CO., LTD.) 25 April 2019 (2019-04-25)</td><td>1-17</td></tr>
<tr><td>A</td><td colspan="2">JP 2020-50623 A (KIRIN HOLDINGS CO., LTD.) 02 April 2020 (2020-04-02)</td><td>1-17</td></tr>
<tr><td colspan="4">☐ Further documents are listed in the continuation of Box C.        ☑ See patent family annex.</td></tr>
<tr><td colspan="2">*    Special categories of cited documents:<br>"A"    document defining the general state of the art which is not considered<br>        to be of particular relevance<br>"E"    earlier application or patent but published on or after the international<br>        filing date<br>"L"    document which may throw doubts on priority claim(s) or which is<br>        cited to establish the publication date of another citation or other<br>        special reason (as specified)<br>"O"    document referring to an oral disclosure, use, exhibition or other<br>        means<br>"P"    document published prior to the international filing date but later than<br>        the priority date claimed</td><td colspan="2">"T"    later document published after the international filing date or priority<br>        date and not in conflict with the application but cited to understand the<br>        principle or theory underlying the invention<br>"X"    document of particular relevance; the claimed invention cannot be<br>        considered novel or cannot be considered to involve an inventive step<br>        when the document is taken alone<br>"Y"    document of particular relevance; the claimed invention cannot be<br>        considered to involve an inventive step when the document is<br>        combined with one or more other such documents, such combination<br>        being obvious to a person skilled in the art<br>"&"    document member of the same patent family</td></tr>
<tr><td colspan="2">Date of the actual completion of the international search<br><br>**23 January 2023**</td><td colspan="2">Date of mailing of the international search report<br><br>**07 February 2023**</td></tr>
<tr><td colspan="2">Name and mailing address of the ISA/JP<br><br>**Japan Patent Office (ISA/JP)**<br>**3-4-3 Kasumigaseki, Chiyoda-ku, Tokyo 100-8915**<br>**Japan**</td><td colspan="2">Authorized officer<br><br><br><br>Telephone No.</td></tr>
</table>

Form PCT/ISA/210 (second sheet) (January 2015)

INTERNATIONAL SEARCH REPORT
Information on patent family members

International application No.

**PCT/JP2022/044594**

| Patent document cited in search report | | | Publication date (day/month/year) | Patent family member(s) | | | Publication date (day/month/year) |
|---|---|---|---|---|---|---|---|
| JP | 2020-180240 | A | 05 November 2020 | (Family: none) | | | |
| JP | 2020-180239 | A | 05 November 2020 | (Family: none) | | | |
| US | 2020/0277450 | A1 | 03 September 2020 | IL | 255404 | A | |
| US | 2006/0127878 | A1 | 15 June 2006 | US | 2007/0068816 | A1 | |
| | | | | AU | 2002953408 | A | |
| | | | | AU | 2002953409 | A | |
| | | | | AU | 2003902305 | A | |
| | | | | AU | 2003287768 | A | |
| JP | 2019-065005 | A | 25 April 2019 | (Family: none) | | | |
| JP | 2020-50623 | A | 02 April 2020 | (Family: none) | | | |

Form PCT/ISA/210 (patent family annex) (January 2015)

**Patent documents cited in the description**

- JP 2021196860 A
- JP 2021196875 A
- JP 2018199753 A
- JP 2017171825 A
- JP 2017051113 A

**Non-patent literature cited in the description**

- **FENG XD ; GUO XQ ; QIU KY.** *Makromol. Chem.,* 1988, vol. 189, 77-83
- **NORIOKA et al.** *NPG Asia Materials,* 2021, vol. 13, 34